# EUROPÄISCHE PATENTANMELDUNG

(11) **EP 4 395 092 A1**
(43) Veröffentlichungstag der Anmeldung: **03.07.2024**
(21) Anmeldenummer: 23218275.8
(22) Anmeldetag: 19.12.2023
(51) Int. Cl.: H02H 3/00, B60L 53/00, H02J 3/26, H02H 1/00, H02J 13/00

(54) **ANSCHLUSSVORRICHTUNG ZUM BEREITSTELLEN VON ELEKTRISCHER ENERGIE, SYSTEM, VERFAHREN SOWIE COMPUTERPROGRAMMPRODUKT**

(30) Priorität: 23.12.2022 DE 102022134789
(71) Anmelder: Mitteldeutsche Netzgesellschaft Strom mbH, 06184 Kabelsketal (DE)
(72) Erfinder: Noske, Tino, 09117 Chemnitz (DE); Haase, Sven, 09430 Drebach (DE)
(74) Vertreter: Bals & Vogel Patentanwälte PartGmbB

(57) **Zusammenfassung**

Die Erfindung betrifft eine Anschlussvorrichtung (2) zum Bereitstellen von Energie eines Netzes (3) für einen Verbraucher (4), aufweisend eine Kontrolleinheit (10) mit mehreren netzseitigen Phasenanschlüsse (11) zum Anschluss mehrerer netzseitiger Phasenleiter (11.1), mehreren verbraucherseitigen Phasenanschlüssen (12) zum Anschluss mehrerer verbraucherseitiger Phasenleiter (12.1), und einem Umschaltmodul (13) zum Erzeugen unterschiedlicher Schaltzustände (220) zum Verbinden zumindest eines der verbraucherseitigen Phasenanschlüsse (12) mit jeweils unterschiedlichen netzseitigen Phasenanschlüssen (11). Ferner betrifft die Erfindung ein System (1), ein Verfahren (100) sowie ein Computerprogrammprodukt.

## Beschreibung

Die Erfindung betrifft eine Anschlussvorrichtung zum Bereitstellen von elektrischer Energie eines Netzes für einen Verbraucher, ein System mit einem Netzknoten und einer Anschlussvorrichtung, ein Verfahren zum Strommanagement sowie ein Computerprogrammprodukt.

In Haushalten steht i. d. R. ein mehrphasiger Hausanschluss zur Bereitstellung von Strom über ein öffentliches Netz zur Verfügung. Einige Typen von Verbrauchern greifen jedoch trotz des mehrphasigen Hausanschlusses nur auf eine der Phasen zu. Beispielsweise nutzen einige Fahrzeuge zum Laden nur eine oder zwei Phasen, wogegen häufig drei Phasen am Hausanschluss zur Verfügung stehen. Gerade beim lastintensiven Laden von Fahrzeugen wird dabei jedoch das Netz unsymmetrisch belastet, d. h. an der genutzten Phase wird eine höhere Last erzeugt, als an den ungenutzten Phasen. Im ungünstigsten Fall können bei einer einphasigen Netzbelastung dadurch bis zu 85% der Netzübertragungsfähigkeit für die Nutzung verloren werden. Gleichzeitig ist die Unsymmetrie verbrauchsabhängig und daher für einen Netzbetreiber nicht oder nur unzureichend vorherbestimmbar und i. d. R. zeitlich veränderlich.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Kontrolle über eine Belastung eines Netzes zum Bereitstellen von elektrischer Energie zu verbessern.

Die voranstehende Aufgabe wird gelöst durch eine Anschlussvorrichtung mit den Merkmalen des Anspruchs 1, ein System mit den Merkmalen des Anspruchs 10, ein Verfahren mit den Merkmalen des Anspruchs 11, sowie ein Computerprogrammprodukt mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Anschlussvorrichtung beschrieben sind, selbstverständlich auch im Zusammenhang mit dem erfindungsgemäßen System, dem erfindungsgemäßen Verfahren und/oder dem erfindungsgemäßen Computerprogrammprodukt und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist eine Anschlussvorrichtung zum Bereitstellen von elektrischer Energie eines Netzes für einen Verbraucher, der vorzugsweise eine unsymmetrische Last im Netz erzeugt, vorgesehen. Die Anschlussvorrichtung weist eine Kontrolleinheit mit mehreren netzseitigen Phasenanschlüssen zum Anschluss mehrerer netzseitiger Phasenleiter auf. Ferner weist die Kontrolleinheit mehrere verbraucherseitige Phasenanschlüsse zum Anschluss mehrerer verbraucherseitiger Phasenleiter und ein Umschaltmodul zum Erzeugen unterschiedlicher Schaltzustände zum elektrischen Verbinden zumindest eines der verbraucherseitigen Phasenanschlüsse mit jeweils unterschiedlichen netzseitigen Phasenanschlüssen auf. Weiterhin umfasst die Anschlussvorrichtung eine netzseitige Kommunikationsschnittstelle zum Erhalt eines externen Steuersignals zum Ansteuern des Umschaltmoduls zum Erzeugen eines der Schaltzustände in Abhängigkeit von einem, insbesondere unsymmetrischen, externen Belastungszustand des Netzes.

Bei dem Netz kann es sich beispielsweise um ein öffentliches und/oder regionales Stromnetz oder ein privates und/oder lokales Stromnetz, wie z. B. ein Stromnetz innerhalb einer Wohnanlage und/oder einer Industrieanlage, handeln. Bei dem Verbraucher kann es sich vorzugsweise um ein Fahrzeug, insbesondere in Form eines Hybrid- und/oder Elektrofahrzeuges, handeln. Weiterhin ist es denkbar, dass der Verbraucher eine Ladevorrichtung, beispielsweise in Form einer Wall-Box, umfasst. Es ist jedoch ebenso denkbar, dass der Verbraucher z. B. eine Industriemaschine, eine Wärmepumpe und/oder einen Küchenherd umfasst. Vorzugsweise ist der Verbraucher, insbesondere nur oder in einem bestimmten Betriebsmodus nur, zur Belastung von einem oder zwei der verbraucherseitigen Phasenanschlüsse ausgebildet.

Die Anschlussvorrichtung kann mit den netzseitigen Anschlüssen über einen Hausanschluss mit dem Netz verbunden oder verbindbar sein. Vorzugsweise weist die Kontrolleinheit drei netzseitige Phasenanschlüsse und drei verbraucherseitige Phasenanschlüsse auf. Unter den Phasenleitern können insbesondere elektrische Leitungen verstanden werden, über welche die Energie beim Entnehmen der Energie aus dem Netz und/oder beim Rückspeisen von Energie in das Netz als mehrphasiger Wechselstrom bereitgestellt wird. Beispielsweise können die netzseitigen Phasenanschlüsse zum Anschluss an ein Niederspannungsdrehstromnetz, insbesondere mit einer Spannung von 400 V, anschließbar oder angeschlossen sein. Zusätzlich zu den Phasenanschlüssen kann die Anschlussvorrichtung zumindest einen netzseitigen Neutralanschluss zum Anschluss eines netzseitigen Neutralleiters und zumindest einen verbraucherseitigen Neutralanschluss zum Anschluss eines verbraucherseitigen Neutralleiters aufweisen.

Die unterschiedlichen Schaltzustände können jeweils unterschiedliche elektrische Verbindungen des zumindest einen verbraucherseitigen Phasenanschluss zu jeweils einem unterschiedlichen netzseitigen Phasenanschluss umfassen. Vorzugsweise ist das Umschaltmodul dazu ausgebildet, jeden der netzseitigen Phasenanschlüsse jeweils mit jedem, d. h. insbesondere einem beliebigen, der verbraucherseitigen Phasenanschlüsse zu verbinden. Beispielsweise kann das Umschaltmodul dazu ausgebildet sein, vorzugsweise sieben verschiedene Schaltzustände zu erzeugen. Das Umschaltmodul kann ein elektrisches und/oder elektronisches Bauteil umfassen, durch welches die Schaltzustände erzeugbar, d. h. insbesondere einstellbar und/oder realisierbar, sind. Der erzeugte Schaltzustand kann ferner dazu geeignet sein, Energie vom Netz zu entnehmen und/oder Energie in das Netz zurückzuspeisen und/oder eine Netztrennung herzustellen.

Bei dem Steuersignal handelt es sich vorzugsweise um ein digitales Signal. Insbesondere kann unter dem externen Steuersignal ein Signal verstanden werden, welches zumindest eine Information zum Ansteuern des Umschaltmoduls umfasst, anhand welcher einer der Schaltzustände eingestellt werden kann. Dabei kann das Steuersignal die Information kontinuierlich, z. B. in Form einer Funktion, übermitteln oder lediglich situationsspezifisch erhalten werden. Es ist denkbar, dass das Steuersignal zusätzlich zur Information zum Ansteuern des Umschaltmoduls weitere Informationen umfasst. Das Steuersignal kann beispielsweise von einem Netzknoten des Netzes, insbesondere über ein Smartmeter Gateway, erhalten werden. Die netzseitige Kommunikationsschnittstelle kann vorzugsweise zur bidirektionalen Datenkommunikation ausgebildet sein, die drahtlos und/oder durch eine elektrische Verbindung ausgeführt sein kann. Beispielsweise kann die netzseitige Kommunikationsschnittstelle eine Ethernet-Schnittstelle umfassen. Zum Ansteuern des Umschaltmoduls kann die netzseitige Kommunikationsschnittstelle direkt oder indirekt mit dem Umschaltmodul verbunden sein, z. B. um das externe Steuersignal an das Umschaltmodul zu übermitteln.

Es ist somit im Rahmen der vorliegenden Erfindung erkannt worden, dass ein lokaler Abgriff von Energie, welcher nicht alle Phasen beansprucht, dazu genutzt werden kann, eine Netzauslastung zu steuern. Ferner ist erkannt worden, dass eine Steuerung der Netzauslastung dann besonders effizient sein kann, wenn diese extern, d. h. beispielsweise durch den Netzbetreiber selbst, erfolgen kann. Durch die netzseitige Kommunikationsschnittstelle wird daher insbesondere ein externer Eingriff in den lokalen, phasenbezogenen Stromabgriff ermöglicht, ohne auf den Verbraucher selbst einzuwirken. Vielmehr kann durch das Umschaltmodul der Anschlussvorrichtung vorzugsweise eine Weiche zur Definition eines Energiepfades zu dem Verbraucher gebildet sein, insbesondere so dass aus Sicht des Verbrauchers die Weichenstellung unbemerkt bleibt. So kann der Verbraucher mit einer einphasigen oder zweiphasigen Last betrieben werden und unabhängig von dem Schaltzustand an die verbraucherseitigen Phasenanschlüsse angeschlossen werden. Dabei kann beispielsweise der netzseitige Phasenleiter mit der höchsten Spannung, d. h. insbesondere der niedrigsten Gesamtlast im Netz, durch einen Schaltzustand, in welchem dieser netzseitige Phasenleiter mit der höchsten Spannung mit dem, vorzugsweise am höchsten, belasteten verbraucherseitigen Phasenleiter verbunden ist, belastet werden. Dadurch kann folglich die lokale Last an der Anschlussvorrichtung auf eine Unsymmetrie des Netzes abgestimmt werden. Somit kann die Netzübertragungsfähigkeit durch die Anschlussvorrichtung erhöht, um beispielsweise geringere Anforderungen an den Netzausbau zu bewirken. Ferner kann das Verfahren zur Verbesserung der Spannungsqualität in dem Stromnetz führen.

Im Rahmen der Erfindung ist es weiterhin denkbar, dass die netzseitige Kommunikationsschnittstelle mit einem Gateway, insbesondere über eine CLS-Verbindung, verbindbar ist und/oder ein Gateway in die Anschlussvorrichtung integriert ist und mit der netzseitigen Kommunikationsschnittstelle, insbesondere über eine CLS-Verbindung, verbunden ist. Bei dem Gateway kann es sich insbesondere um einen Kommunikationszugang eines Haushaltes oder einer Anlage für einen Netzbetreiber des Netzes handeln. Beispielsweise können über das Gateway lokale Messdaten, die an der Anschlussvorrichtung, im Haushalt und/oder in der Anlage gemessen werden, an den Netzbetreiber sendbar sein. Das Gateway kann beispielsweise einen Stromzähler zur Übermittlung von Verbrauchsinformationen an den Netzbetreiber umfassen. Insbesondere kann es sich bei dem Gateway um ein intelligentes Messsystem (iMSys) und/oder ein Smart Meter Gateway handeln. Unter der CLS-Verbindung kann insbesondere eine Verbindung auf Grundlage eines Controllable-Local-System-Standards verstanden werden. Dazu kann die netzseitige Kommunikationsschnittstelle über eine Ethernet-Verbindung mit dem Gateway verbunden sein. Zur Kommunikation mit dem Gateway kann die netzseitige Kommunikationsschnittstelle zur Kommunikation mit einem Kommunikationsstandard, insbesondere nach Vorgaben von z. B. BSI und/oder FNN, und/oder zur Kommunikation über ein Kommunikationsprotokoll, wie z. B. EEBus und/oder KNX, ausgebildet sein. Durch das Gateway können somit weitere Funktionen bei der Kommunikation mit dem Netzbetreiber ermöglicht werden. Durch die Integration des Gateways in die Anschlussvorrichtung kann eine einfache Installation der Anschlussvorrichtung in einem Haushalt oder in einer Anlage ermöglicht sein.

Im Rahmen der Erfindung ist es weiterhin denkbar, dass die Kontrolleinheit ein Steuermodul zum Erkennen einer, insbesondere internen und/oder externen, Unsymmetrie einer Belastung der netzseitigen Phasenanschlüsse und/oder der verbraucherseitigen Phasenanschlüsse und zum Ansteuern des Umschaltmoduls zum Erzeugen des Schaltzustandes oder eines anderen Schaltzustandes, so dass der erzeugte Schaltzustand der Unsymmetrie zumindest teilweise entgegenwirkt, aufweist. Das Erkennen der Unsymmetrie kann durch das Steuermodul in definierten Zeitabständen und/oder in Abhängigkeit von einer Unsymmetrieschwelle durchführbar sein. Der Schaltzustand, der der Unsymmetrie zumindest teilweise entgegenwirkt, kann dadurch den externen Belastungszustand zumindest teilweise ausgleichen und/oder das Netz entlasten. Somit kann das Umschaltmodul zusätzlich zu der externen Ansteuerung über die netzseitige Kommunikationsschnittstelle autonom durch die Anschlussvorrichtung ansteuerbar sein. Zum Erkennen der Unsymmetrie kann beispielsweise ein Phasenstrom und/oder eine Phasenspannung an den netzseitigen und/oder verbraucherseitigen Phasenanschlüssen gemessen werden. Dazu kann die Kontrolleinheit einen Stromsensor und/oder einen Spannungssensor aufweisen. Es ist denkbar, dass die Kontrolleinheit dazu ausgebildet ist, das Steuermodul durch das externe Steuersignal zu blockieren und/oder das externe Steuersignal gegenüber einem internen Steuersignal des Steuermoduls zum Ansteuern des Umschaltmoduls zu priorisieren. Dadurch kann sichergestellt sein, dass der Netzbetreiber die Anschlussvorrichtung auch bei einem internen Erkennen der Unsymmetrie steuern kann. Dabei wird insbesondere die Möglichkeit der Regelung der phasenbezogenen Leistung einer mehrphasigen Energiebereitstellung dazu genutzt, bedarfsweise den Verteilernetzverhältnissen angepasst, unsymmetrisch Leistung aus dem Stromnetz zu beziehen und/oder zurückzuspeisen.

Im Rahmen der Erfindung ist es weiterhin denkbar, dass das Umschaltmodul eine Schaltmatrix zum Erzeugen der unterschiedlichen Schaltzustände aufweist, insbesondere durch welche jeder der netzseitigen Phasenanschlüsse in zumindest einem der Schaltzustände mit jedem der verbraucherseitigen Phasenanschlüsse verbindbar ist. Durch die Schaltmatrix können die netzseitigen Phasenanschlüsse wahlweise kombinierbar mit den verbraucherseitigen Phasenanschlüssen verbindbar sein. Dazu kann die Schaltmatrix mehrere, vorzugsweise neun, Schaltelemente zum Erzeugen der Schaltzustände aufweisen. Zusätzlich kann die Schaltmatrix ein weiteres Schaltelement für den Neutralleiter aufweisen. Die Schaltelemente können z. B. in Form von leistungselektronischen Bauelementen, insbesondere Halbleiterbauelemente, und/oder mechanischen Relais ausgeführt sein. Dabei kann das Umschaltmodul dazu ausgebildet sein, die Schaltmatrix, insbesondere die Schaltelemente, für ein Schalten in einem Nulldurchgang der jeweiligen Phasenspannungen und Phasenströmen anzusteuern. Dabei kann die Anschlussvorrichtung insbesondere bei einer Ausführung in Form von leistungselektronischen Bauelementen kompakt ausgeführt sein und eine schnelle Schaltreaktion zur Verbesserung der Netzstabilität ermöglichen.

Weiterhin kann bei einer erfindungsgemäßen Anschlussvorrichtung vorteilhafterweise vorgesehen sein, dass die Kontrolleinheit eine verbraucherseitige Kommunikationsschnittstelle zur bidirektionalen Kommunikation mit dem Verbraucher aufweist, insbesondere wobei die verbraucherseitige Kommunikationsschnittstelle mit dem Umschaltmodul zum Erzeugen des Schaltzustandes oder eines der Schaltzustände in Abhängigkeit von der Kommunikation mit dem Verbraucher verbunden ist. Über die bidirektionale Kommunikation mit dem Verbraucher kann dadurch ein Leistungsbedarf des Verbrauchers, insbesondere vor dem Abruf der jeweiligen Leistung, erfasst werden. Dabei kann die Kontrolleinheit dazu ausgebildet sein, den Leistungsbedarf über die netzseitige Kommunikationsschnittstelle zu versenden, um den Leistungsbedarf einem Netzbetreiber zur Verfügung zu stellen. Es ist jedoch ebenso denkbar, dass die Kontrolleinheit dazu ausgebildet ist, den Schaltzustand in Abhängigkeit von der Kommunikation mit dem Verbraucher und dem externen Steuersignal und/oder der Unsymmetrie einzustellen und/oder abzustimmen. Beispielsweise kann die verbraucherseitige Kommunikationsschnittstelle zur direkten Kommunikation mit einem Fahrzeug beim Laden des Fahrzeuges ausgebildet sein, um eine geforderte Ladeleistung, insbesondere für einen priorisierten Ladevorgang, zu erfassen. Somit kann die Abstimmung einer Leistungsabgabe und/oder des Schaltzustandes mit dem Verbraucher verbessert werden.

Ferner kann bei einer erfindungsgemäßen Anschlussvorrichtung vorteilhafterweise vorgesehen sein, dass die Kontrolleinheit ein Leistungskontrollmodul zum Definieren einer, insbesondere phasenselektiven, Leistungsabgabe an den Verbraucher beim Bereitstellen der Energie aufweist, insbesondere wobei das Leistungskontrollmodul dazu ausgebildet ist, durch das externe Steuersignal über die netzseitige Kommunikationsschnittstelle zum Definieren der Leistungsabgabe angesteuert zu werden. Die Definition der Leistungsabgabe kann beispielsweise eine Spannungsänderung der Phasenspannungen, insbesondere in Form einer Rampenfunktion, umfassen. Insbesondere kann das Leistungskontrollmodul dazu ausgebildet sein, Sollleistungen anhand der Definition der Leistungsabgabe als Funktion der Phasenspannung zu berechnen. Dadurch kann beispielsweise eine langsame Spannungsänderung erzielt werden, um das Initiieren plötzlicher Netzschwankungen durch eine zu schnelle Spannungsänderung zu vermeiden. Dadurch kann die lokale Netzwächter-Funktionalität verbessert sein. Zum Erfassen der Phasenströme kann die Anschlussvorrichtung phasenspezifische Stromsensoren aufweisen. Die Phasenspannungen und Phasenströme können dazu jeweils zwischen den Phasenanschlüssen und dem Neutralleiter gemessen werden. Weiterhin kann durch die netzseitige Kommunikationsschnittstelle eine Gesamtleistung netzseitig regelbar sein. Beispielsweise kann bei einer hohen Gesamtauslastung des Netzes durch das externe Steuersignal eine Anforderung einer Leistungsreduktion der Gesamtleistung übermittelt werden. In diesem Fall kann die Leistungsabgabe durch das Leistungskontrollmodul für alle Phasenleiter beschränkbar sein. Durch die phasenselektive Leistungsabgabe können ferner die Sollleistungen für die Phasenleiter beispielsweise zumindest teilweise invers zu der Unsymmetrie bestimmt werden. Dabei kann die Schaltmatrix unsymmetrisch und gegensätzlich zu der Unsymmetrie angesteuert werden, um eine zumindest teilweise Kompensation der Unsymmetrie zu erwirken.

Vorzugsweise kann bei einer erfindungsgemäßen Anschlussvorrichtung vorgesehen sein, dass das Leistungskontrollmodul mit der verbraucherseitigen Kommunikationsschnittstelle zum Definieren der Leistungsabgabe in Abhängigkeit von dem Verbraucher verbunden ist. Dadurch kann das Leistungskontrollmodul unmittelbar mit dem Verbraucher kommunizieren, um die Leistungsabgabe, vorzugsweise phasenselektiv, zu steuern. Beispielsweise können dadurch weitere, zwischengeschaltete Geräte, wie beispielsweise eine Ladestation, entfallen. Dazu kann die Anschlussvorrichtung ein Schütz aufweisen, welches phasenweise ansteuerbar ist. Ferner kann dabei durch das Leistungskontrollmodul eine direkte externe Kommunikation, beispielsweise mit einem Netzknoten, über die netzseitige Kommunikationsschnittstelle und eine direkte verbraucherseitige Kommunikation erfolgen, um die Leistungsabgabe zu kombinieren. Zusätzlich oder alternativ kann das Leistungskontrollmodul dazu ausgebildet sein, durch das Steuermodul zum Definieren der Leistungsabgabe angesteuert zu werden.

Es ist ferner bei einer erfindungsgemäßen Anschlussvorrichtung denkbar, dass die Kontrolleinheit ein Ladekontrollmodul zum Durchführen eines Ladevorgangs einer Batterie des Verbrauchers durch die Bereitstellung der Energie aufweist, insbesondere wobei das Ladekontrollmodul mit der verbraucherseitigen Kommunikationsschnittstelle zur Koordinierung des Ladevorgangs mit dem Verbraucher verbunden ist. Vorzugsweise kann die Anschlussvorrichtung dabei ferner einen verbraucherseitigen Neutralanschluss zum Anschluss eines verbraucherseitigen Neutralleiters und einen netzseitigen Neutralanschluss zum Anschluss eines netzseitigen Neutralleiters, beispielsweise durch ein elektronisches Bauelement, schaltbar miteinander verbunden sein. Weiterhin kann die Anschlussvorrichtung einen Schutzleiteranschluss zum Anschluss einer Erdung des Verbrauchers aufweisen. Zur Sicherstellung der Spannungsfreiheit an den netzseitigen und/oder verbraucherseitigen Phasenanschlüssen kann beispielsweise die Anschlussvorrichtung ferner eine schaltbare Verbindung zum Schutzleiteranschluss innerhalb der Erfindung aufweisen. Dadurch kann die Anschlussvorrichtung Anforderungen einer Ladestation erfüllen, so dass das Ladekontrollmodul eine zusätzliche Ladestation, wie z. B. eine Wallbox, ersetzen kann. Gerade beim Durchführen des Ladevorgangs können je nach Ladegeschwindigkeit hohe Leistungsabrufe erfolgen. Dadurch ist es dabei besonders vorteilhaft für den Netzbetreiber, über das externe Steuersignal von außen auf die Anschlussvorrichtung einwirken zu können, um auf den externen Belastungszustand reagieren zu können.

Vorzugsweise kann bei einer erfindungsgemäßen Anschlussvorrichtung vorgesehen sein, dass das Ladekontrollmodul zur Durchführung des Ladevorgangs für ein Fahrzeug als Verbraucher ausgebildet ist, wobei die verbraucherseitige Kommunikationsschnittstelle ein Fahrzeugkommunikationsprotokoll zur direkten Kommunikation mit dem Fahrzeug während des Ladevorgangs umfasst. Somit kann das Leistungskontrollmodul zum Definieren der Leistungsabgabe, insbesondere unmittelbar, als Ladeleistung zum Aufladen der Batterie des Fahrzeuges ausgebildet sein. Bei der Batterie kann es sich insbesondere um eine Fahrzeugbatterie des Fahrzeuges, z. B. in Form einer Traktionsbatterie des Fahrzeuges, handeln. Beispielsweise kann die verbraucherseitige Kommunikationsschnittstelle für eine Kommunikation auf Basis der Norm ISO 15118 oder DIN 15118 ausgebildet sein. Weiterhin kann die Anschlussvorrichtung einen Ladestecker zum Koppeln mit dem Fahrzeug und/oder eine Ladebuchse zur Aufnahme eines Ladesteckers umfassen. Dadurch kann die Anschlussvorrichtung einen Ladevorgang, insbesondere autonom, d. h. in diesem Zusammenhang beispielsweise ohne zwischengeschaltete Ladestation, durchführen. Es ist denkbar, dass das Ladekontrollmodul einen Normallademodus und einen priorisierten Lademodus zum beschleunigten Aufladen der Batterie aufweist.

Weiterhin kann bei einer erfindungsgemäßen Anschlussvorrichtung vorteilhafterweise vorgesehen sein, dass eine Schalteinheit vorgesehen ist, durch welche die Kontrolleinheit zwischen einem ersten Betriebsmodus der Kontrolleinheit, in welchem die Kontrolleinheit mit einer externen Ladevorrichtung zum Laden des Fahrzeuges, insbesondere direkt, verbindbar ist, und einem zweiten Betriebsmodus der Kontrolleinheit zum, insbesondere direkten, Durchführen des Ladevorgangs durch das Ladekontrollmodul, umschaltbar ist. Es kann vorgesehen sein, dass bei einem Umschalten zwischen dem ersten und zweiten Betriebsmodus ein Kommunikationsstandard der verbraucherseitigen Kommunikationsschnittstelle änderbar ist. Beispielsweise kann die verbraucherseitige Kommunikationsschnittstelle im ersten Betriebsmodus zur Kommunikation über einen EEBus und im zweiten Betriebsmodus zur Kommunikation auf Basis der Norm ISO 15118 oder DIN 15118 eingestellt sein. Dadurch kann die Anschlussvorrichtung sowohl mit der externen Ladevorrichtung als auch direkt mit dem Fahrzeug koppelbar sein. Somit kann die Anschlussvorrichtung sowohl an Ladepunkten eingesetzt werden, die bereits über eine Ladevorrichtung verfügen, als auch selbst einen Ladepunkt schaffen. Weiterhin ist es denkbar, dass die Anschlussvorrichtung variabel mit unterschiedlichen Ladetechnologien, wie z. B. Gleichstromladen und/oder Wechselstromladen, einsetzbar sein kann. Dadurch kann die Flexibilität des Einsatzes der Anschlussvorrichtung verbessert werden, wodurch eine Verbreitung der Anschlussvorrichtung und damit ein großflächiger Einsatz begünstigt werden.

Weiterhin ist es bei einer erfindungsgemäßen Anschlussvorrichtung denkbar, dass die Kontrolleinheit ein Speichermodul zur Speicherung zumindest einer historischen Belastungsinformation der verbraucherseitigen Phasenleiter zumindest eines historischen Bereitstellungsvorgangs für Energie und ein Vorhersagemodul zur Vorhersage einer zukünftigen Belastungsinformation anhand der historischen Belastungsinformation aufweist, insbesondere wobei das Umschaltmodul mit dem Vorhersagemodul zur Berücksichtigung der Vorhersage beim Erzeugen des Schaltzustandes verbunden ist. Die historische und zukünftige Belastungsinformation kann eine Belastung und/oder Nutzung, insbesondere einen Leistungsabruf und/oder eine Belegung der verbraucherseitigen Phasenanschlüsse umfassen. Vorzugsweise kann das Speichermodul zur Speicherung historischer Belastungsinformationen mehrerer Bereitstellungsvorgänge und das Vorhersagemodul zur Vorhersage der zukünftigen Belastungsinformation anhand der historischen Belastungsinformationen ausgestaltet sein. Beispielsweise kann das Vorhersagemodul zur Durchführung einer Mustererkennung anhand der historischen Belastungsinformationen ausgebildet sein. Wenn die Anschlussvorrichtung beispielsweise in einem Haushalt zum Laden eines Elektrofahrzeuges eingesetzt wird, das beim Laden nur einen bestimmten verbraucherseitigen Phasenanschluss nutzt, kann durch die Vorhersage abgeschätzt werden, dass der nächste Ladevorgang die gleichen verbraucherseitigen Phasenanschlüsse nutzt. Dadurch kann in Abhängigkeit von dem externen Belastungszustand und/oder der Unsymmetrie einer der erzeugbaren Schaltzustände anhand der Vorhersage voreinstellbar sein, insbesondere um für den nächsten Ladevorgang unmittelbar zu Beginn eine maximale Symmetrierung des Netzes zu erzielen. Bei der Mustererkennung kann dies beispielsweise auch für mehrere Fahrzeuge in einem Haushalt durchgeführt bzw. vorhergesagt werden.

Weiterhin ist es bei einer erfindungsgemäßen Anschlussvorrichtung denkbar, dass eine naherzeugerseitige Kommunikationsschnittstelle zur bidirektionalen Kommunikation mit einer lokalen Einspeisevorrichtung zum Einspeisen von lokal erzeugter Energie in das Netz und/oder zum Bereitstellen von lokal erzeugter Energie für den Verbraucher vorgesehen ist, wobei die naherzeugerseitige Kommunikationsschnittstelle mit dem Umschaltmodul zum Erzeugen des Schaltzustandes oder eines der Schaltzustände in Abhängigkeit von der Kommunikation mit der lokalen Einspeisevorrichtung verbunden ist. Unter dem Naherzeuger kann eine Anlage zum Erzeugen von elektrischer Energie, insbesondere in Form einer Photovoltaik-Anlage und/oder einer Windkraftanlage, verstanden werden. Ferner ist es denkbar, dass der Verbraucher selbst als Naherzeuger eingesetzt werden kann, beispielsweise um Netzschwankungen durch Bereitstellung von Energie durch die Batterie auszugleichen. Die naherzeugerseitige Kommunikationsschnittstelle kann z. B. eine HAN-Schnittstelle umfassen. Dadurch kann die vom Naherzeuger bereitgestellte Belastung des Netzes beim Erzeugen des Schaltzustandes berücksichtigt werden und/oder ein separater Schaltzustand beim Einspeisen der lokal erzeugten Energie hergestellt werden.

Weiterhin kann bei einer erfindungsgemäßen Anschlussvorrichtung vorteilhafterweise vorgesehen sein, dass die Anschlussvorrichtung ein Gehäuse aufweist, in welchem die Kontrolleinheit angeordnet ist, insbesondere wobei das Gehäuse mit einem Siegel zum Nachweis eines unberechtigten Zugriffs verschlossen ist. Dadurch können die Kontrolleinheit und/oder die Kommunikationsschnittstellen der Anschlussvorrichtung manipulationssicher verschlossen sein. In dem Gehäuse kann ferner das Gateway angeordnet sein. Die Schalteinheit zum Umschalten zwischen dem ersten und zweiten Betriebsmodus kann von außen zugänglich am Gehäuse angeordnet sein. Dadurch können die einzelnen Komponenten zu einer funktionalen Einheit vereint sein. Insbesondere kann die Anschlussvorrichtung dadurch in einer Elektroverteilung, insbesondere in Form einer Trag- und/oder Hutschiene, eines Haushaltes oder einer Anlage angeordnet sein.

Die Kontrolleinheit kann einen Prozessor und/oder einen Mikroprozessor umfassen. Ferner kann die Kontrolleinheit zumindest teilweise oder vollständig in ein zentrales Steuergerät der Anschlussvorrichtung integriert sein. Die Module der Kontrolleinheit, d.h. insbesondere das Umschaltmodul, das Schaltmodul, das Steuermodul, das Leistungskontrollmodul, das Ladekontrollmodul, das Speichermodul und/oder das Vorhersagemodul können separat zueinander ausgeführt sein oder zumindest teilweise miteinander verbunden sein. Es kann beispielsweise vorgesehen sein, dass die Module durch Speicherbereiche, elektronische Schaltungen und/oder, insbesondere programmierte, elektronische Bauelemente der Kontrolleinheit gebildet sind. Die Module der Kontrolleinheit können gemeinsam auf einer Leiterplatte oder verteilt auf mehreren Leiterplatten angeordnet sein. Weiterhin können die Module vollständig innerhalb des Gehäuses angeordnet sein. Vorzugsweise sind die netzseitige, die verbraucherseitige und/oder die naherzeugerseitige Kommunikationsschnittstelle in die Kontrolleinheit integriert.

Gemäß einem weiteren Aspekt der Erfindung ist ein System vorgesehen. Das System weist einen Netzknoten eines Netzes zum Bereitstellen von Energie für zumindest eine Verbrauchergruppe auf. Ferner umfasst das System eine erfindungsgemäße Anschlussvorrichtung. Die Anschlussvorrichtung weist eine Kontrolleinheit mit mehreren netzseitigen Phasenanschlüsse zum Anschluss mehrerer netzseitiger Phasenleiter, mehreren verbraucherseitigen Phasenanschlüsse zum Anschluss mehrerer verbraucherseitiger Phasenleiter und einem Umschaltmodul zum Erzeugen unterschiedlicher Schaltzustände zum elektrischen Verbinden zumindest eines der verbraucherseitigen Phasenanschlüsse zu jeweils unterschiedlichen netzseitigen Phasenanschlüssen auf. Ferner umfasst die Anschlussvorrichtung, vorzugsweise die Kontrolleinheit, eine netzseitige Kommunikationsschnittstelle zum Erhalt eines externen Steuersignals zum Ansteuern des Umschaltmoduls zum Erzeugen eines der Schaltzustände in Abhängigkeit von einem externen Belastungszustand des Netzes. Der Netzknoten umfasst eine Leitstelle zum Initiieren des Steuersignals.

Somit bringt ein erfindungsgemäßes System die gleichen Vorteile mit sich, wie sie bereits ausführlich mit Bezug auf eine erfindungsgemäße Anschlussvorrichtung beschrieben worden sind. Der Netzknoten kann beispielsweise eine Trafostation umfassen. Die Leitstelle kann durch eine Kontrollvorrichtung, insbesondere in Form eines Computers, gebildet sein. Das Initiieren des Steuersignals kann ein Versenden des Steuersignals zur Übermittlung an die netzseitige Kommunikationsschnittstelle der Anschlussvorrichtung umfassen. Weiterhin ist es denkbar, dass das System eine Ladevorrichtung zum Durchführen eines Ladevorgangs für eine Batterie eines Fahrzeuges umfasst. Die Ladevorrichtung kann über die verbraucherseitigen Phasenanschlüsse mit der Anschlussvorrichtung, insbesondere der Kontrolleinheit, verbunden sein. Die Verbrauchergruppe kann den Verbraucher und/oder die Anschlussvorrichtung umfassen.

Gemäß einem weiteren Aspekt der Erfindung ist ein Verfahren zum Strommanagement beim Bereitstellen von elektrischer Energie eines Netzes für einen Verbraucher durch eine Kontrolleinheit einer Anschlussvorrichtung, insbesondere einer erfindungsgemäßen Anschlussvorrichtung, vorgesehen. Die Kontrolleinheit weist mehrere netzseitige Phasenanschlüsse zum Anschluss mehrerer netzseitiger Phasenleiter, mehrere verbraucherseitige Phasenanschlüsse zum Anschluss mehrerer verbraucherseitiger Phasenleiter auf. Das Verfahren umfasst, insbesondere in Form von Verfahrensschritten:
- Erhalt eines externen Steuersignals in Abhängigkeit von einem externen Belastungszustand des Netzes, insbesondere durch eine netzseitige Kommunikationsschnittstelle der Anschlussvorrichtung,
- Erzeugen eines Schaltzustandes von mehreren unterschiedlichen Schaltzuständen zum elektrischen Verbinden zumindest eines der verbraucherseitigen Phasenanschlüsse zu jeweils unterschiedlichen netzseitigen Phasenanschlüssen in Abhängigkeit von dem externen Steuersignal, insbesondere durch ein Umschaltmodul der Kontrolleinheit.

Somit bringt ein erfindungsgemäßes Verfahren die gleichen Vorteile mit sich, wie sie bereits ausführlich mit Bezug auf eine erfindungsgemäße Anschlussvorrichtung und/oder ein erfindungsgemäßes System beschrieben worden sind.

Vorzugsweise kann bei einem erfindungsgemäßen Verfahren vorgesehen sein, dass das Verfahren, insbesondere in Form von Verfahrensschritten, umfasst:
- Erkennen zumindest eines der verbraucherseitigen Phasenleiter als belasteter Phasenleiter beim Bereitstellen der Energie, insbesondere durch ein Steuermodul der Kontrolleinheit,
- Erkennen einer, insbesondere internen oder externen, Unsymmetrie einer Belastung der netzseitigen Phasenanschlüsse und/oder verbraucherseitigen Phasenanschlüsse, insbesondere durch das Steuermodul,
wobei die Unsymmetrie und/oder der belastete Phasenleiter beim Erzeugen des Schaltzustandes berücksichtigt werden, so dass der Schaltzustand der Unsymmetrie zumindest teilweise entgegenwirkt. Beim Erkennen des belasteten Phasenleiters kann beispielsweise eine Phasenspannung und/oder ein Phasenstrom an den verbraucherseitigen und/oder den netzseitigen Phasenanschlüssen gemessen werden. Zum Erkennen der Unsymmetrie können die Phasenspannungen, die Phasenströme und/oder Phasenleistungen der Phasenleiter miteinander verglichen werden. Das Umschalten des Schaltzustandes kann beispielsweise durch Ansteuern einer Schaltmatrix der Kontrolleinheit erfolgen. Somit kann der Schaltzustand, der der Unsymmetrie zumindest teilweise entgegenwirkt, den externen Belastungszustand zumindest teilweise, insbesondere durch eine Leistungssteuerung und/oder den Schaltzustand, ausgleichen und/oder das Netz entlasten.

Weiterhin ist es bei einem erfindungsgemäßen Verfahren denkbar, dass das Verfahren, insbesondere in Form eines Verfahrensschrittes, umfasst:
- Definieren einer Leistungsabgabe zur Abgabe an den Verbraucher beim Bereitstellen der Energie in Abhängigkeit von dem Steuersignal, insbesondere durch ein Leistungskontrollmodul der Kontrolleinheit.
Beim Definieren der Leistungsabgabe kann eine separate Sollleistung für jeden der Phasenleiter, insbesondere selektiv eingeregelt werden. Ferner kann eine Gesamtleistung aller Phasenleiter reduziert oder erhöht werden, um eine Gesamtlast des Netzes zu reduzieren. Dadurch kann beispielsweise die Übertragungsfähigkeit erhöht und/oder ein Ausfall des Netzes verhindert werden.

Weiterhin ist es bei einem erfindungsgemäßen Verfahren denkbar, dass das Verfahren, insbesondere in Form eines Verfahrensschrittes, umfasst:
- Umschalten zwischen einem ersten Betriebsmodus der Kontrolleinheit, in welchem die Kontrolleinheit mit einer externen Ladevorrichtung zum Laden eines Fahrzeuges verbindbar ist, und einem zweiten Betriebsmodus der Kontrolleinheit zum Durchführen des Ladevorgangs, insbesondere direkt, durch die Kontrolleinheit.
Durch den ersten und zweiten Betriebsmodus kann die Anschlussvorrichtung flexibel eingesetzt werden. Beispielsweise kann der erste Betriebsmodus eingestellt werden, wenn im Haushalt eine Ladevorrichtung vorgesehen ist, und der zweite Betriebsmodus, wenn das Fahrzeug direkt über die Anschlussvorrichtung geladen werden soll. Beim Umschalten kann ein Kommunikationsprotokoll einer verbraucherseitigen Kommunikationsschnittstelle zur Kommunikation mit dem Verbraucher eingestellt werden.

Ferner kann bei einem erfindungsgemäßen Verfahren vorteilhafterweise vorgesehen sein, dass zumindest eine historische Belastungsinformation der verbraucherseitigen Phasenleiter zumindest eines historischen Bereitstellungsvorgangs gespeichert ist oder wird, wobei eine Vorhersage einer zukünftigen Belastungsinformation anhand der historischen Belastungsinformation getroffen und beim Erzeugen des Schaltzustandes berücksichtigt wird. Es kann vorgesehen sein, dass historische Belastungsinformationen mehrerer Bereitstellungsvorgänge abgespeichert werden und die Vorhersage eine Mustererkennung anhand der historischen Belastungsinformationen umfasst. Dadurch kann in Abhängigkeit von dem externen Belastungszustand und/oder der Unsymmetrie einer der erzeugbaren Schaltzustände anhand der Vorhersage voreingestellt werden, insbesondere um für den nächsten Ladevorgang unmittelbar zu Beginn eine maximale Symmetrierung des Netzes zu erzielen.

Gemäß einem weiteren Aspekt der Erfindung ist ein Computerprogrammprodukt, vorgesehen. Das Computerprogrammprodukt umfasst Befehle, die bei einer Ausführung durch eine Kontrolleinheit die Kontrolleinheit veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf eine erfindungsgemäße Anschlussvorrichtung, ein erfindungsgemäßes System und/oder ein erfindungsgemäßes Verfahren beschrieben worden sind. Bei dem Verfahren kann es sich insbesondere um ein computerimplementiertes Verfahren handeln. Bei der Kontrolleinheit kann es sich um die Kontrolleinheit der Anschlussvorrichtung handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein erfindungsgemäßes System mit einer erfindungsgemäßen Anschlussvorrichtung in einem ersten Betriebsmodus,
- Figur 2: das System mit der Anschlussvorrichtung in einem zweiten Betriebsmodus,
- Figur 3: eine Schaltmatrix einer Kontrolleinheit der Anschlussvorrichtung,
- Figur 4: einen Verlauf einer durch ein Leistungskontrollmodul definierten Leistungsabgabe,
- Figur 5: ein erfindungsgemäßes Verfahren zum Strommanagement durch die Kontrolleinheit der Anschlussvorrichtung.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

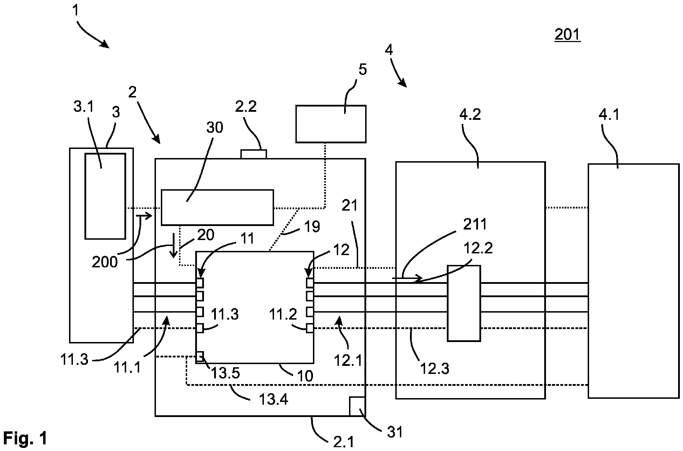

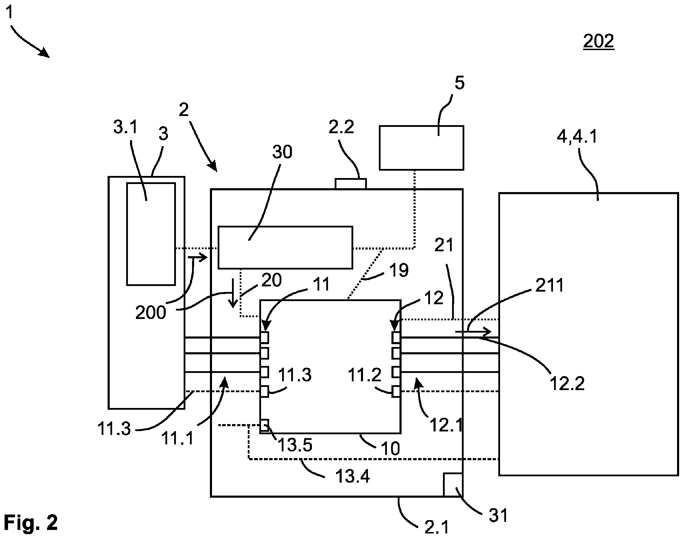

Figur 1 zeigt ein erfindungsgemäßes System 1 mit einer erfindungsgemäßen Anschlussvorrichtung 2 zum Bereitstellen von elektrischer Energie eines Netzes 3 für einen Verbraucher 4. Das System 1 weist ferner einen Netzknoten 3.1 des Netzes 3 auf, über welchen die Energie für zumindest eine Verbrauchergruppe bereitstellbar ist. Ein Haushalt, in welchem die Anschlussvorrichtung 2 installiert ist, bildet dabei einen Teil der Verbrauchergruppe. Beispielsweise kann der Netzknoten 3.1 eine Trafostation des Netzes 3 oder einen anderen Infrastrukturpunkt des Netzes 3 umfassen. Im vorliegenden Ausführungsbeispiel handelt es sich bei dem Verbraucher 4 gemäß Figur 1 um eine Ladestation mit einem angeschlossenen Fahrzeug 4.1, gemäß Figur 2 um ein Fahrzeug 4.1. Es ist jedoch ebenso denkbar, dass der Verbraucher 4 durch eine andere elektrische Vorrichtung, wie z. B. eine, vorzugsweise einphasige, Wärmepumpe, gebildet ist. Aufgrund des hohen Strom- und Leistungsbedarfs kann das Laden von Fahrzeugen 4.1 jedoch eine Herausforderung für das Netz 3 darstellen, so dass der Einsatz der Anschlussvorrichtung 2 dabei besonders vorteilhaft sein kann. Die Anschlussvorrichtung 2 weist ein Gehäuse 2.1 auf, in welchem eine Kontrolleinheit 10 der Anschlussvorrichtung 2 angeordnet ist. Das Gehäuse 2.1 ist mit einem Siegel 2.2 zum Nachweis eines unberechtigten Zugriffs, insbesondere manipulationssicher, verschlossen.

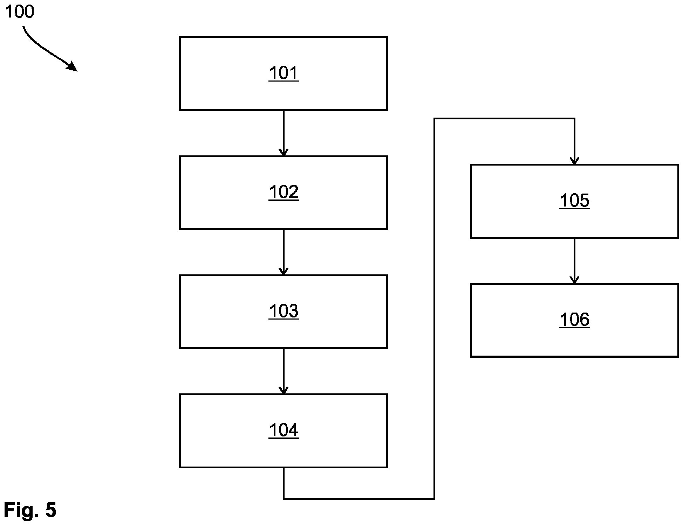

Die Anschlussvorrichtung 2 weist die Kontrolleinheit 10 mit mehreren, hier drei, netzseitigen Phasenanschlüssen 11 zum Anschluss mehrerer netzseitiger Phasenleiter 11.1 und mehreren, hier drei, verbraucherseitigen Phasenanschlüssen 12 zum Anschluss mehrerer verbraucherseitiger Phasenleiter 12.1 auf. Die verbraucherseitigen Phasenleiter 12.1 sind in Figur 1 mit der Ladevorrichtung 4.2 verbunden, die netzseitigen Phasenleiter 11.1 mit dem Netz 3. Weiterhin weist die Kontrolleinheit 10 einen netzseitigen Neutralleiteranschluss 13.2 zum Anschluss eines netzseitigen Neutralleiters 11.3, einen verbraucherseitigen Neutralleiteranschluss 13.3 zum Anschluss eines verbraucherseitigen Neutralleiters 12.3 und einen Schutzleiteranschluss 13.5 zum Anschluss eines Schutzleiters 13.4 auf. Vorzugsweise ist die Kontrolleinheit 10 zum Durchführen eines erfindungsgemäßen Verfahrens 100 zum Strommanagement ausgebildet, dessen Verfahrensschritte in Figur 5 dargestellt sind. Dazu kann ein Computerprogrammprodukt vorgesehen sein, das Befehle umfasst, die bei einer Ausführung durch die Kontrolleinheit 10 die Kontrolleinheit 10 veranlassen, das Verfahren 100 auszuführen.

Der Verbraucher 4 ist insbesondere dazu ausgebildet, die elektrische Energie nur über einen oder zwei der verbraucherseitigen Phasenanschlüsse 12 abzurufen, wodurch das Netz 3 unsymmetrisch belastet wird. Es ist im Rahmen der Erfindung erkannt worden, dass dies ausgenutzt werden kann, um einem unsymmetrischen, externen Belastungszustand des Netzes 3, der beispielsweise durch andere, ein- oder zweiphasige Vorgänge im Netz 3 hervorgerufen wird, entgegenzuwirken.

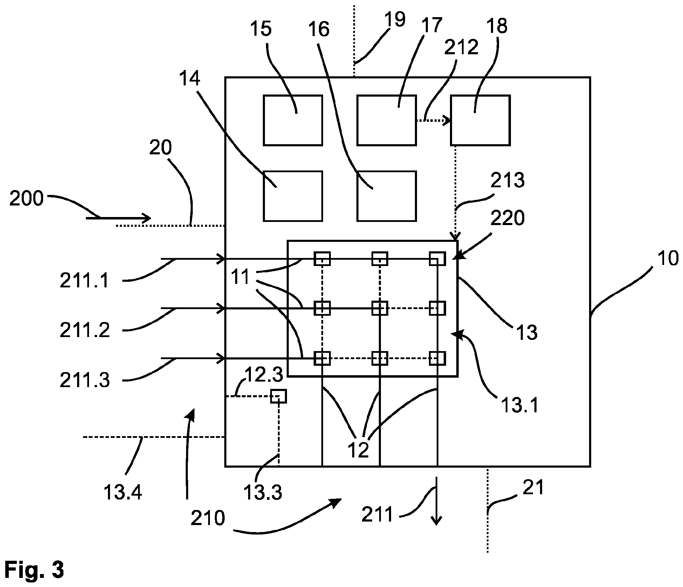

Dazu weist die Kontrolleinheit 10 ein Umschaltmodul 13 zum Erzeugen unterschiedlicher Schaltzustände 220 zum elektrischen Verbinden zumindest eines der verbraucherseitigen Phasenanschlüsse 12 zu jeweils unterschiedlichen netzseitigen Phasenanschlüssen 11 auf. Das Umschaltmodul 13 ist in Figur 3 gezeigt und umfasst eine Schaltmatrix 13.1 zum Erzeugen der unterschiedlichen Schaltzustände 220, durch welche jeder der netzseitigen Phasenleiter 11.1 in zumindest einem der Schaltzustände 220 mit jedem der verbraucherseitigen Phasenleiter 12.1 verbindbar ist. Durch die Schaltmatrix 13.1 können insbesondere beliebige Paarungen der netzseitigen Phasenanschlüsse 11 und der verbraucherseitigen Phasenanschlüsse 12 erzeugt werden, um die jeweiligen Phasenleiter 11.1, 12.1 zu verbinden.

Zum Umschalten der Schaltzustände 220 weist die Anschlussvorrichtung 2, insbesondere die Kontrolleinheit 10, ferner eine netzseitige Kommunikationsschnittstelle 20 zum Erhalt eines externen Steuersignals 200 zum Ansteuern des Umschaltmoduls 13 zum Erzeugen eines der Schaltzustände 220 in Abhängigkeit von einem unsymmetrischen, externen Belastungszustand des Netzes 3 auf. Bei dem unsymmetrischen, externen Belastungszustand unterscheiden sich netzseitige Belastungen der netzseitigen Phasenleiter 11.1 zumindest teilweise oder alle untereinander. Zum Initiieren, insbesondere zum Aussenden, des Steuersignals 200 kann der Netzknoten 3.1 eine Leitstelle umfassen. Wie in Figur 1 dargestellt ist die netzseitige Kommunikationsschnittstelle 20 zum Empfang des externen Steuersignals 200 mit einem Gateway 30, insbesondere über eine CLS-Verbindung, verbunden. Es ist jedoch ebenso denkbar, dass das Gateway 30 in die Anschlussvorrichtung 2 integriert ist.

Weiterhin weist die Kontrolleinheit 10 ein Steuermodul 14 auf, das zum Erkennen 104 einer, insbesondere internen und/oder externen, Unsymmetrie 210 einer Belastung der netzseitigen Phasenanschlüsse 11 und/oder der verbraucherseitigen Phasenanschlüsse 12 und zum Ansteuern des Umschaltmoduls 13 zum Erzeugen 105 eines der Schaltzustände 220, der der Unsymmetrie 210 zumindest teilweise entgegenwirkt, ausgebildet ist. Wird die Unsymmetrie 210 anhand der netzseitigen Phasenanschlüsse 11 erkannt, kann dies auf den externen Belastungszustand schließen lassen. Dadurch kann die Anschlussvorrichtung 2 eine Anpassung des Schaltzustandes 220 auch autonom durchführen.

Bei dem Verfahren 100 erfolgt vorzugsweise ein Erhalt 102 des externen Steuersignals 200 in Abhängigkeit von dem externen Belastungszustand des Netzes 3, um anhand des externen Steuersignals 200 das Erzeugen 105 des Schaltzustandes 220 auszuführen. Zum Erkennen der Unsymmetrie 210 kann bei dem Verfahren 100 zunächst ein Erkennen 103 zumindest eines der verbraucherseitigen Phasenleiter 12.1 als belasteter Phasenleiter 12.2 erfolgen. Weiterhin erfolgt das Erkennen 104 der Unsymmetrie 210 der netzseitigen Phasenanschlüsse 11, insbesondere durch das externe Steuersignal 200 den vorliegenden Schaltzustand 220. Die Unsymmetrie 210 und der belastete Phasenleiter 12.2 können beim Erzeugen 104 des zu erzeugenden Schaltzustandes 220 berücksichtigt werden, indem der belastete Phasenleiter 12.2 mit einem netzseitigen Phasenleiter 11.1 verschaltet wird, der nur eine geringe Belastung aufweist.

Der externe Belastungszustand führt nämlich insbesondere dazu, dass die netzseitigen Phasenleiter 11.1 unterschiedlich belastet werden. Weist beispielsweise einer der netzseitigen Phasenleiter 11.1 eine erste, niedrigere Belastung 211.1 auf, als die weiteren netzseitigen Belastungen 211.2, 211.3 der übrigen netzseitigen Phasenleiter 11.1, kann das Umschaltmodul 13, wie in Figur 3 gezeigt, einen Schaltzustand 220 einstellen, bei welchem der einphasige Abruf der Energie über den netzseitigen Phasenleiter 11.1 erfolgt, der die erste netzseitige Belastung 211.1 aufweist. Der externe Belastungszustand kann beispielsweise am Netzknoten 3.1 festgestellt werden.

Zum Durchführen des Ladevorgangs weist die Kontrolleinheit 10 ein Ladekontrollmodul 16 auf. Weiterhin umfasst die Kontrolleinheit 10 eine verbraucherseitige Kommunikationsschnittstelle 21 zur bidirektionalen Kommunikation mit dem Verbraucher 4, die mit dem Ladekontrollmodul 16 zur Koordinierung des Ladevorgangs mit dem Verbraucher 4 verbunden ist. Insbesondere ist das Ladekontrollmodul 16 zur Durchführung des Ladevorgangs für das Fahrzeug 4.1 ausgebildet. Für das Energiemanagement ist die verbraucherseitige Kommunikationsschnittstelle 21 ferner mit dem Umschaltmodul 13 zum Erzeugen eines der Schaltzustände 220 in Abhängigkeit von der Kommunikation mit dem Verbraucher 4 verbunden.

Um bereits zu Beginn des Ladevorgangs den voraussichtlichen Schaltzustand 220 voreinzustellen, umfasst die Kontrolleinheit 10 ferner ein Speichermodul 17 zur Speicherung zumindest einer historischen Belastungsinformation 212 der verbraucherseitigen Phasenleiter 12.1 zumindest eines historischen Bereitstellungsvorgangs für Energie. Vorzugsweise können durch das Speichermodul 17 mehrere historische Belastungsinformationen 212 mehrerer historischer Bereitstellungsvorgänge gespeichert werden. Weiterhin umfasst die Kontrolleinheit 10 ein Vorhersagemodul 18 zur Vorhersage einer zukünftigen Belastungsinformation 213 anhand der historischen Belastungsinformation 212. Das Umschaltmodul 13 ist dabei mit dem Vorhersagemodul 18 zur Berücksichtigung der Vorhersage beim Erzeugen des Schaltzustandes 220 verbunden. Somit können die historischen Belastungsinformationen 212 dazu genutzt werden, ein Muster zu erkennen. Folglich kann anhand der Vorhersage und anhand des externen Steuersignals 200 bereits eine Paarung der verbraucherseitigen Phasenleiter 12.1 und der netzseitigen Phasenleiter 11.1 ermittelt und voreingestellt werden, bevor der Ladevorgang beginnt. Dies kann für den Ladevorgang beispielsweise dadurch erfolgen, dass die Phasenspannungen der netzseitigen Phasenanschlüsse 11 verglichen werden und der netzseitige Phasenanschluss 11 mit der höchsten Spannung durch die Schaltmatrix 13.1 mit jenem verbraucherseitigen Phasenanschluss 12 kombiniert wird, bei der anhand der historischen Belastungsinformationen 212 erfahrungsgemäß der höchste Leistungs- bzw. Energiebezug vorlag. Der netzseitige Phasenanschluss 11 mit der zweithöchsten Spannung, wird mit dem verbraucherseitigen Phasenanschluss 12 verschaltet, welcher anhand der historischen Belastungsinformationen 212 den zweithöchsten Leistungs- bzw. Energiebezug aufwies.

Dadurch kann die Anschlussvorrichtung 2 direkt mit der Ladevorrichtung 4.2, wie in Figur 1 gezeigt, und/oder dem Fahrzeug 4.1, wie in Figur 2 gezeigt, koppelbar sein. Für die direkte Kopplung mit dem Fahrzeug 4.1 umfasst die verbraucherseitige Kommunikationsschnittstelle 21 ein Fahrzeugkommunikationsprotokoll zur direkten Kommunikation mit dem Fahrzeug 4.1 während des Ladevorgangs. Vorzugsweise kann am Gehäuse 2.1 und/oder softwareseitig eine Schalteinheit 31 vorgesehen sein, durch welche die Kontrolleinheit 10 ein Umschalten 101 zwischen einem ersten Betriebsmodus 201, in welchem die Kontrolleinheit 10 gemäß Figur 1 mit der Ladevorrichtung 4.2 zum Laden des Fahrzeuges 4.1 verbindbar ist, und einem zweiten Betriebsmodus 202, zum Durchführen des Ladevorgangs durch das Ladekontrollmodul 16 gemäß Figur 2, bewirken kann. Dadurch kann die Anschlussvorrichtung 2 je nach Einsatzort und/oder Situation die Ladevorrichtung 4.2, wie in Figur 2 gezeigt, ersetzen oder, wie in Figur 1 gezeigt, mit der zwischengeschalteten Ladevorrichtung 4.2 zum Laden des Fahrzeuges 4.1 betrieben werden.

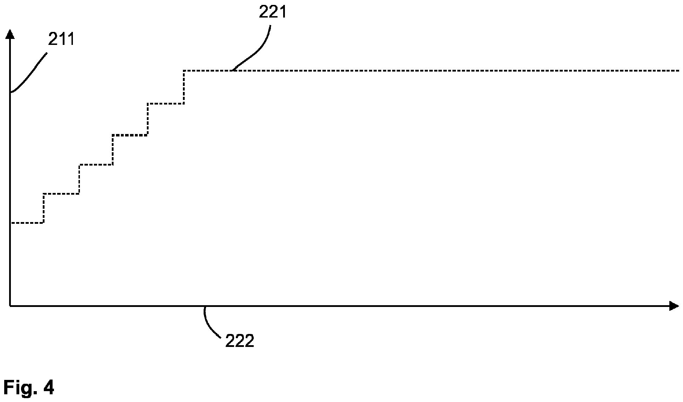

Zum weiteren Schutz des Netzes 3 weist die Kontrolleinheit 10 ferner ein Leistungskontrollmodul 15 zum Definieren 106 einer Leistungsabgabe 211 an den Verbraucher 4 beim Bereitstellen der Energie auf. Das Leistungskontrollmodul 15 ist dazu ausgebildet, durch das externe Steuersignal 200 über die netzseitige Kommunikationsschnittstelle 20 zum Definieren 106 der Leistungsabgabe 211, insbesondere in Form eines Verlaufes einer Sollleistung 221, angesteuert zu werden. Dabei kann die Leistungsabgabe 211, wie beispielsweise in Figur 4 gezeigt, durch eine Spannungsänderung einer Phasenspannung 222 des belasteten, verbraucherseitigen Phasenleiter 12.2, insbesondere in Form einer Rampenfunktion, beeinflusst werden. Dazu kann eine Leistungselektronik der Anschlussvorrichtung 2 angesteuert werden, um die Phasenspannung 222 zu ändern. Durch die Definition 106 der Leistungsabgabe 211 kann eine Gesamtleistung und/oder eine phasenspezifische Leistung angepasst werden. Für die Abstimmung mit dem Verbraucher 4, z. B. bei dem Ladevorgang, kann das Leistungskontrollmodul 15 mit der verbraucherseitigen Kommunikationsschnittstelle 21 zum Definieren 106 der Leistungsabgabe 211 in Abhängigkeit von dem Verbraucher 4 verbunden sein. Insbesondere wenn der Verbraucher 4 eine mehrphasige Leistungsabgabe 211, kann die Leistungsabgabe 211 phasenselektiv betrieben werden, um dem unsymmetrischen externen Belastungszustand des Netzes 3 entgegenzuwirken.

Wie in den Figuren 1 und 2 gezeigt, weist die Kontrolleinheit 10 ferner eine naherzeugerseitige Kommunikationsschnittstelle 19 zur bidirektionalen Kommunikation mit einer lokalen Einspeisevorrichtung 5 zum Einspeisen von lokal erzeugter Energie in das Netz 3 und/oder zum Bereitstellen von lokal erzeugter Energie für den Verbraucher 4 auf. Dazu ist die naherzeugerseitige Kommunikationsschnittstelle 19 mit dem Umschaltmodul 13 zum Erzeugen eines der Schaltzustände 220 in Abhängigkeit von der Kommunikation mit der lokalen Einspeisevorrichtung 5 verbunden. Somit können sämtliche beteiligte Komponenten des Haushaltes durch das Umschaltmodul 13 berücksichtigt und/oder bedient werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 1: System
- 2: Anschlussvorrichtung
- 2.1: Gehäuse
- 2.2: Siegel
- 3: Netz
- 3.1: Netzknoten
- 4: Verbraucher
- 4.1: Fahrzeug
- 5: Einspeisevorrichtung

- 10: Kontrolleinheit
- 11: netzseitiger Phasenanschluss
- 11.1: netzseitiger Phasenleiter
- 11.3: netzseitiger Neutralleiter
- 12: verbraucherseitiger Phasenanschluss
- 12.1: verbraucherseitiger Phasenleiter
- 12.2: belasteter Phasenleiter
- 12.3: verbraucherseitiger Neutralleiter
- 13: Umschaltmodul
- 13.1: Schaltmatrix
- 13.2: netzseitiger Neutralleiteranschluss
- 13.3: verbraucherseitiger Neutralleiteranschluss
- 13.4: Schutzleiter
- 13.5: Schutzleiteranschluss
- 14: Steuermodul
- 15: Leistungskontrollmodul
- 16: Ladekontrollmodul
- 17: Speichermodul
- 18: Vorhersagemodul
- 19: naherzeugerseitige Kommunikationsschnittstelle

- 20: netzseitige Kommunikationsschnittstelle
- 21: verbraucherseitige Kommunikationsschnittstelle

- 30: Gateway
- 31: Schalteinheit

- 100: Verfahren
- 101: Umschalten zwischen 201 und 202
- 102: Erhalt von 200
- 103: Erkennen von 102
- 104: Erkennen von 12.2
- 105: Erzeugen von 220
- 106: Anpassen von 201

- 200: Steuersignal
- 201: erster Betriebsmodus
- 202: zweiter Betriebsmodus

- 210: Unsymmetrie
- 211: Leistungsabgabe
- 211.1: erste netzseitige Belastung
- 211.2: zweite netzseitige Belastung
- 211.3: dritte netzseitige Belastung

- 212: historisches Belastungsinformation
- 213: zukünftiges Belastungsinformation

- 220: Schaltzustände
- 221: Sollleistungen
- 222: Phasenspannung

## Patentansprüche

1. Anschlussvorrichtung (2) zum Bereitstellen von elektrischer Energie eines Netzes (3) für einen Verbraucher (4), aufweisend
eine Kontrolleinheit (10) mit
mehreren netzseitigen Phasenanschlüssen (11) zum Anschluss mehrerer netzseitiger Phasenleiter (11.1),
mehreren verbraucherseitigen Phasenanschlüssen (12) zum Anschluss mehrerer verbraucherseitiger Phasenleiter (12.1), und
einem Umschaltmodul (13) zum Erzeugen unterschiedlicher Schaltzustände (220) zum elektrischen Verbinden zumindest eines der verbraucherseitigen Phasenanschlüsse (12) mit jeweils unterschiedlichen netzseitigen Phasenanschlüssen (11), und
eine netzseitige Kommunikationsschnittstelle (20) zum Erhalt eines externen Steuersignals (200) zum Ansteuern des Umschaltmoduls (13) zum Erzeugen eines der Schaltzustände (220) in Abhängigkeit von einem externen Belastungszustand des Netzes (3).

2. Anschlussvorrichtung (2) nach Anspruch 1,
**dadurch gekennzeichnet,**
**dass** die netzseitige Kommunikationsschnittstelle (20) mit einem Gateway (30), insbesondere über eine CLS-Verbindung, verbindbar ist und/oder ein Gateway (30) in die Anschlussvorrichtung (2) integriert ist und mit der netzseitigen Kommunikationsschnittstelle (20), insbesondere über eine CLS-Verbindung, verbunden ist.

3. Anschlussvorrichtung (2) nach Anspruch 1 oder 2,
**dadurch gekennzeichnet,**
**dass** die Kontrolleinheit (10) ein Steuermodul (14) zum Erkennen einer Unsymmetrie (210) einer Belastung der netzseitigen Phasenanschlüsse (11) und/oder der verbraucherseitigen Phasenanschlüsse (12) und zum Ansteuern des Umschaltmoduls (13) zum Erzeugen des Schaltzustandes (220), so dass der erzeugte Schaltzustand (220) der Unsymmetrie (210) zumindest teilweise entgegenwirkt, aufweist.

4. Anschlussvorrichtung (2) nach einem der vorhergehenden Ansprüche,
**dadurch gekennzeichnet,**
**dass** das Umschaltmodul (13) eine Schaltmatrix (13.1) zum Erzeugen der unterschiedlichen Schaltzustände (220) aufweist, durch welche jeder der netzseitigen Phasenanschlüsse (11) in zumindest einem der Schaltzustände (220) mit jedem der verbraucherseitigen Phasenanschlüsse (12) verbindbar ist, und/oder
**dass** die Kontrolleinheit (10) eine verbraucherseitige Kommunikationsschnittstelle (21) zur bidirektionalen Kommunikation mit dem Verbraucher (4) aufweist, wobei die verbraucherseitige Kommunikationsschnittstelle (21) mit dem Umschaltmodul (13) zum Erzeugen des Schaltzustandes (220) in Abhängigkeit von der Kommunikation mit dem Verbraucher (4) verbunden ist.

5. Anschlussvorrichtung (2) nach einem der vorhergehenden Ansprüche,
**dadurch gekennzeichnet,**
**dass** die Kontrolleinheit (10) ein Leistungskontrollmodul (15) zum Definieren einer Leistungsabgabe (211) an den Verbraucher (4) beim Bereitstellen der Energie aufweist, insbesondere wobei das Leistungskontrollmodul (15) dazu ausgebildet ist, durch das externe Steuersignal (200) über die netzseitige Kommunikationsschnittstelle (20) zum Definieren der Leistungsabgabe (211) angesteuert zu werden.

6. Anschlussvorrichtung (2) nach einem der vorhergehenden Ansprüche,
**dadurch gekennzeichnet,**
**dass** das Leistungskontrollmodul (15) mit der verbraucherseitigen Kommunikationsschnittstelle (21) zum Definieren der Leistungsabgabe (211) in Abhängigkeit von dem Verbraucher (4) verbunden ist, und/oder
**dass** die Kontrolleinheit (10) ein Ladekontrollmodul (16) zum Durchführen eines Ladevorgangs einer Batterie des Verbrauchers (4) durch die Bereitstellung der Energie, wobei das Ladekontrollmodul (16) mit der verbraucherseitigen Kommunikationsschnittstelle (21) zur Koordinierung des Ladevorgangs mit dem Verbraucher (4) verbunden ist.

7. Anschlussvorrichtung (2) nach einem der vorhergehenden Ansprüche,
**dadurch gekennzeichnet,**
**dass** das Ladekontrollmodul (16) zur Durchführung des Ladevorgangs für ein Fahrzeug (4.1) als Verbraucher (4) ausgebildet ist, wobei die verbraucherseitige Kommunikationsschnittstelle (21) ein Fahrzeugkommunikationsprotokoll zur direkten Kommunikation mit dem Fahrzeug (4.1) während des Ladevorgangs umfasst, und/oder dass eine Schalteinheit (31) vorgesehen ist, durch welche die Kontrolleinheit (10) zwischen einem ersten Betriebsmodus (201) der Kontrolleinheit (10), in welchem die Kontrolleinheit (10) mit einer externen Ladevorrichtung (4.2) zum Laden des Fahrzeuges (4.1) verbindbar ist, und einem zweiten Betriebsmodus (202) der Kontrolleinheit (10) zum Durchführen des Ladevorgangs durch das Ladekontrollmodul (16), umschaltbar ist.

8. Anschlussvorrichtung (2) nach einem der vorhergehenden Ansprüche,
**dadurch gekennzeichnet,**
**dass** die Kontrolleinheit (10) ein Speichermodul (17) zur Speicherung zumindest einer historischen Belastungsinformation (212) der verbraucherseitigen Phasenleiter (12.1) zumindest eines historischen Bereitstellungsvorgangs für Energie und ein Vorhersagemodul (18) zur Vorhersage einer zukünftigen Belastungsinformation (213) anhand der historischen Belastungsinformation (212) aufweist, wobei das Umschaltmodul (13) mit dem Vorhersagemodul (18) zur Berücksichtigung der Vorhersage beim Erzeugen des Schaltzustandes (220) verbunden ist.

9. Anschlussvorrichtung (2) nach einem der vorhergehenden Ansprüche,
**dadurch gekennzeichnet,**
**dass** eine naherzeugerseitige Kommunikationsschnittstelle (19) zur bidirektionalen Kommunikation mit einer lokalen Einspeisevorrichtung (5) zum Einspeisen von lokal erzeugter Energie in das Netz (3) und/oder zum Bereitstellen von lokal erzeugter Energie für den Verbraucher (4) vorgesehen ist, wobei die naherzeugerseitige Kommunikationsschnittstelle (19) mit dem Umschaltmodul (13) zum Erzeugen des Schaltzustandes (220) in Abhängigkeit von der Kommunikation mit der lokalen Einspeisevorrichtung (5) verbunden ist, und/oder
**dass** die Anschlussvorrichtung (2) ein Gehäuse (2.1) aufweist, in welchem die Kontrolleinheit (10) angeordnet ist, wobei das Gehäuse (2.1) mit einem Siegel (2.2) zum Nachweis eines unberechtigten Zugriffs verschlossen ist.

10. System (1) aufweisend
einen Netzknoten (3.1) eines Netzes (3) zum Bereitstellen von Energie für zumindest eine Verbrauchergruppe,
eine Anschlussvorrichtung (2) nach einem der vorhergehenden Ansprüche, die eine Kontrolleinheit (10) mit mehreren netzseitigen Phasenanschlüsse (11) zum Anschluss mehrerer netzseitiger Phasenleiter (11.1), mehreren verbraucherseitigen Phasenanschlüsse (12) zum Anschluss mehrerer verbraucherseitiger Phasenleiter (12.1), und einem Umschaltmodul (13) zum Erzeugen unterschiedlicher Schaltzustände (220) zum elektrischen Verbinden zumindest eines der verbraucherseitigen Phasenanschlüsse (12) zu jeweils unterschiedlichen netzseitigen Phasenanschlüssen (11), und eine netzseitige Kommunikationsschnittstelle (20) zum Erhalt eines externen Steuersignals (200) zum Ansteuern des Umschaltmoduls (13) zum Erzeugen eines der Schaltzustände (220) in Abhängigkeit von einem externen Belastungszustand des Netzes (3) aufweist,
wobei der Netzknoten (3.1) eine Leitstelle zum Initiieren des Steuersignals (200) aufweist.

11. Verfahren (100) zum Strommanagement beim Bereitstellen von elektrischer Energie eines Netzes (3) für einen Verbraucher (4) durch eine Kontrolleinheit (10) einer Anschlussvorrichtung (2), insbesondere nach einem der vorhergehenden Ansprüche, wobei die Kontrolleinheit (10) mehrere netzseitige Phasenanschlüsse (11) zum Anschluss mehrerer netzseitiger Phasenleiter (11.1) und mehrere verbraucherseitige Phasenanschlüsse (12) zum Anschluss mehrerer verbraucherseitiger Phasenleiter (12.1) aufweist,
umfassend:
- Erhalt (102) eines externen Steuersignals (200) in Abhängigkeit von einem externen Belastungszustand des Netzes (3),
- Erzeugen (105) eines Schaltzustandes (220) von mehreren unterschiedlichen Schaltzuständen (220) zum elektrischen Verbinden zumindest eines der verbraucherseitigen Phasenanschlüsse (12) zu jeweils unterschiedlichen netzseitigen Phasenanschlüssen (11) in Abhängigkeit von dem externen Steuersignal (200).

12. Verfahren (100) nach Anspruch 11,
**dadurch gekennzeichnet,**
**dass** das Verfahren (100) umfasst:
- Erkennen (103) zumindest eines der verbraucherseitigen Phasenleiter (12.1) als belasteter Phasenleiter (12.2) beim Bereitstellen der Energie,
- Erkennen (104) einer Unsymmetrie (210) einer Belastung der netzseitigen Phasenanschlüsse (11) und/oder der verbraucherseitigen Phasenanschlüsse (12),
wobei die Unsymmetrie (210) und der belastete Phasenleiter (12.2) beim Erzeugen (104) des Schaltzustandes (220) berücksichtigt werden, so dass der Schaltzustand (220) der Unsymmetrie (210) zumindest teilweise entgegenwirkt.

13. Verfahren (100) nach Anspruch 11 oder 12,
**dadurch gekennzeichnet,**
**dass** das Verfahren (100) umfasst:
- Definieren (106) einer Leistungsabgabe (211) zur Abgabe an den Verbraucher (4) beim Bereitstellen der Energie in Abhängigkeit von dem Steuersignal (200), und/oder dass das Verfahren (100) umfasst:
- Umschalten (101) zwischen einem ersten Betriebsmodus (201) der Kontrolleinheit (10), in welchem die Kontrolleinheit (10) mit einer externen Ladevorrichtung (4.2) zum Laden eines Fahrzeuges (4.1) verbindbar ist, und einem zweiten Betriebsmodus (202) der Kontrolleinheit (10) zum Durchführen des Ladevorgangs durch die Kontrolleinheit (10).

14. Verfahren (100) nach einem der vorhergehenden Ansprüche,
**dadurch gekennzeichnet,**
**dass** zumindest eine historische Belastungsinformation (212) der verbraucherseitigen Phasenleiter (12.1) zumindest eines historischen Bereitstellungsvorgangs gespeichert ist, wobei eine Vorhersage einer zukünftigen Belastungsinformation (213) anhand der historischen Belastungsinformation (212) getroffen und beim Erzeugen des Schaltzustandes (220) berücksichtigt wird.

15. Computerprogrammprodukt, umfassend Befehle, die bei einer Ausführung durch eine Kontrolleinheit (10) die Kontrolleinheit (10) veranlassen, ein Verfahren (100) nach einem der vorhergehenden Ansprüche auszuführen.
